# EUROPEAN PATENT APPLICATION

(11) **EP 2 538 733 A1**
(43) Date of publication of application: **26.12.2012**
(21) Application number: 11170743.6
(22) Date of filing: 21.06.2011
(51) Int. Cl.: H04W 52/34, H04W 52/14, H04W 52/26, H04W 52/36, H04W 52/42

(54) **Apparatus and method for controlling uplink throughput in a cellular communications system**

(71) Applicant: TELEFONAKTIEBOLAGET LM ERICSSON (publ), 164 83 Stockholm (SE)
(72) Inventor: Johansson, Klas, 172 33 SUNDBYBERG (SE); Morén, Lennart, 269 92 BÅSTAD (SE); Nyberg, Henrik, 117 50 STOCKHOLM (SE); Wallén Anders, 271 31 YSTAD (SE)
(74) Representative: Lundqvist, Alida Maria Therése

(57) **Abstract**

The disclosure relates to a radio base station (102) and method in a radio base station of a cellular communications system (100) for controlling uplink throughput. The radio base station (102) supports communication with a user equipment (101) using multiple uplink carriers (104a, 104b). The method comprises detecting an indication that the user equipment (101) transmits with a transmit power above a threshold indicating when the transmit power is near a maximum transmit power of the user equipment (101). The method further comprises executing, in response to detecting the indication that the user equipment (101) transmits with a transmit power above the threshold, an action to reduce a maximum power reduction of the user equipment (101) to increase the achievable uplink throughput of the user equipment (101).

## Description

### TECHNICAL FIELD

The embodiments described herein relate to controlling uplink throughput in a cellular communications system and in particular to controlling uplink throughput of a user equipment that uses multiple uplink carriers for transmission.

### BACKGROUND

There is a continuous development of new generations of mobile communications technologies to cope with increasing requirements of higher data rates, improved efficiency and lower costs. High Speed Downlink Packet Access (HSDPA) and High Speed Uplink Packet Access (HSUPA), together referred to as High Speed Packet Access (HSPA), are mobile communication protocols that were developed to cope with higher data rates than original Wideband Code Division Multiple Access (WCDMA) protocols were capable of. The 3rd Generation Partnership Project (3GPP) is a standards-developing organization that is continuing its work of evolving HSPA and creating new standards that allow for even higher data rates and improved functionality.

In a radio access network implementing HSPA, a user equipment (UE) is wirelessly connected to a radio base station (RBS) commonly referred to as a NodeB (NB). A radio base station is a general term for a radio network node capable of transmitting radio signals to a user equipment (UE) and receiving signals transmitted by a user equipment (UE).

Dual-Carrier High-Speed Downlink Packet Access (DC-HSDPA, also known as Dual-Cell HSDPA) was introduced within the 3GPP release 8. DC-HSDPA enables reception of data from two cells simultaneously, where the data is transmitted on two adjacent carriers from the same base station and sector to individual user equipments (UEs) or terminals. The concept of DC-HSDPA is in 3GPP release 10 extended to 4 downlink carrier frequencies known as 4 carrier-HSDPA (4C-HSDPA). With 4-carrier HSDPA the NodeB can schedule downlink transmission to one UE on up to four downlink carriers simultaneously and the UE can use up to two adjacent uplink carriers.

To complement DC-HSDPA, in 3GPP release 9, Dual-Carrier High-Speed Uplink Packet Access (DC-HSUPA) was also introduced. DC-HSUPA enables an individual terminal to transmit data on two adjacent carrier frequencies simultaneously to the radio access network. DC-HSUPA according to 3GPP release 9 is in essence an aggregation of legacy single-carrier HSUPA according to 3GPP release 8.

In multi-cell HSPA/multi-carrier HSPA (MC-HSPA), carriers that can be dynamically activated/deactivated are referred to as secondary carriers. A secondary carrier may be a secondary downlink carrier or a secondary uplink carrier. The uplink and downlink carriers that cannot be deactivated are referred to as primary or anchor carriers. In 3GPP specifications a secondary downlink carrier is also referred to as a secondary serving HS-DSCH (High-Speed Downlink Shared Channel) cell and a secondary uplink carrier is also referred to as a secondary uplink frequency.

One of the important features in MC-HSPA systems is the serving NodeB's ability to dynamically determine which of the downlink carriers that a certain UE needs to listen to and which uplink carriers that a UE should transmit physical control channels and potentially payload data on. An obvious reason for activating a secondary uplink or downlink carrier for a certain UE is to increase the instantaneous data rate. The additional spectrum bandwidth associated with multi-carrier operation does not increase "spectral efficiency", i.e. the maximum achievable throughput per cell per Hz [bps/cell/Hz], but the experienced user data rates are increased significantly. In particular, for bursty packet data traffic at low and moderate load, the data rate is proportional to the number of carriers exploited. Moreover, power inefficient higher order modulation schemes can be avoided. This is especially important in the uplink. Furthermore, the practical as well as theoretical peak data rates of the system are naturally increased.

Handover and radio access bearer admission control is presumed to be conducted in a Radio Network Controller (RNC) based on measurements of e.g. path loss on a primary carrier. Notice though, that in case of a distributed radio access network (RAN) architecture where NodeB and RNC functionality, as defined in 3GPP specifications, is collocated in a base station, the base station would naturally handle also these functionalities. In a DC-HSUPA capable NodeB, the secondary carrier is assumed to be configured by the RNC for a given DC-HSUPA capable UE and then scheduled and activated by NodeB whenever feasible and useful. The decision whether to activate a secondary carrier may for example be driven by an objective to maximize the supported traffic volumes or the aggregate system throughput, subject to fairness criteria and quality of service constraints, such as minimum bit rate or maximum latency requirements. As mentioned above, a primary carrier, on the other hand, may not be temporarily deactivated by the NodeB. To deactivate a certain primary carrier for a connection, the connection is either released, or an inter-frequency handover is performed in which case another carrier will become the primary carrier.

For each user connected in DC-HSUPA mode, the serving NodeB hence controls whether or not a secondary carrier is activated. Furthermore, the NodeB scheduler controls how much of the available uplink resources that are allocated to each activated carrier for each user. The distribution of uplink resources can be parameterized in several ways. One such parameter being used is scheduled data rate, which is the maximum uplink data rate that a user can transmit on a particular carrier. In order to successfully transmit this scheduled data rate, a certain signal-to-noise ratio is required for the physical data channel, more specifically the E-DCH dedicated physical data channel, E-DPDCH, which can be parameterized by the maximum allowed power ratio between the E-DPDCH and the Dedicated Physical Control Channel (DPCCH). This maximum allowed power ratio is herein referred to as a scheduled or allocated grant. The actual power ratio used by the UE is referred to as the employed grant, which may be less than or equal to the scheduled grant. Henceforth, when discussing scheduled and employed uplink resources in general terms, grants and data rates may be used interchangeably.

Furthermore, if a secondary carrier is activated by the NodeB, it is assumed that the Dedicated Physical Control Channel (DPCCH), which includes a sequence of pilot bits, is transmitted on that carrier, and the NodeB hence tries to detect this signal.

An important aspect of uplink transmission in HSUPA is that performance can be power limited. This occurs when a UE is transmitting with full output power but still is not able to reach the maximal scheduled bitrate. If the maximal scheduled bitrate is not reached the UE is not able to utilize all the resources in the serving NodeB that are available for the UE. Power limitations are typically more pronounced for the uplink than for the downlink since the available output power of a UE is usually smaller than for a base station. Furthermore, power limitations will occur more often for multi-carrier uplink operation than for single-carrier operation; this in part because the total UE power needs to be shared across all the activated uplink carriers in multi-carrier operation.

As mentioned above multi-carrier operation may increase the instantaneous data rate compared to single-carrier operation. However, there are several difficulties or drawbacks associated with multi-carrier operation. Compared to single-carrier operation, multi-carrier operation spends more power on control channel overhead for multiple carriers and there is a risk for inefficiencies in power sharing for multiple carriers. Furthermore, due to waveform characteristics amplification of multicarrier signals by a power amplifier (PA) can result in more undesirable out-of-band spectral components, mainly caused by spectral regrowth and intermodulation products due to nonlinearities in the power amplifier. Requirements on maximum allowed out-of-band emissions may necessitate operation with a certain maximum power reduction (MPR), also referred to as power backoff, transmit power backoff or output power backoff. The maximum power reduction refers to the amount, typically measured in dB, by which the UE is allowed to reduce its maximum power for a particular physical channel configuration. For the WCDMA standard, including HSUPA and DC-HSUPA, the maximum power reduction is specified through the Cubic Metric (CM). The Cubic Metric is a characteristic of a waveform, and consequently of the corresponding physical channel configuration. It is calculated as the root mean square value of the cube of the waveform, with proper normalization constants applied, according to Section 6.2.2 and 6.2.2A in 3GPP TS25.101 for the WCDMA standard. The reason for specifying the maximum power reduction through the CM for WCDMA is that it is gives a reasonably accurate estimate of how much the maximum power needs to be reduced for typical state-of-the-art power amplifiers (PAs) in order not to violate the out-of-band emission requirements when using a particular waveform. So far, maximum power reduction is defined in 3GPP for the single-carrier case and the adjacent dual-carrier case. For other configurations, it is possible that 3GPP will define the maximum power reduction to be both smaller and larger. The larger the maximum power reduction is when using a particular waveform, the less nonlinear distortion will be for a given PA and a given configuration of this. If instead no maximum power reduction would be employed, the linearity of the PA needs to be improved when using a waveform with a high CM in order to fulfill the out-of-band emission requirements. This can be achieved by using a larger PA and/or change the PA configuration, but this would lower the PA efficiency and consequently increase the overall power consumption, battery drain and heat dissipation.

As mentioned above, the increased MPR for a dual-carrier signal counteracts the primary goal to improve the aggregate user throughput, since less power is available for the data channels.

The above stated difficulties and drawbacks may need to be managed in connection with multi-carrier operation to achieve a desired uplink throughput.

### SUMMARY

It is an object to provide a method and apparatus that, at least to some extent, allows for controlling of uplink throughput in a cellular communications system.

The above stated object is achieved by means of a method and radio base station according to the independent claims.

A first embodiment provides a method in a radio base station of a cellular communications system for controlling uplink throughput. The radio base station is in communication with a user equipment using multiple uplink carriers. The method comprises detecting an indication that the user equipment transmits with a transmit power above a threshold indicating when the transmit power is near a maximum transmit power of the user equipment. The method further comprises executing, in response to detecting the indication that the user equipment transmits with a transmit power above the threshold, an action to reduce a maximum power reduction of the user equipment to increase the achievable uplink throughput of the user equipment.

A second embodiment provides a radio base station for use in a cellular communications system. The radio base station comprises a receiver and a transmitter for communication with a user equipment using multiple uplink carriers. The radio base station further comprises data processing circuitry. The data processing circuitry is configured to detect an indication that the user equipment transmits with a transmit power above a threshold indicating when the transmit power is near a maximum transmit power of the user equipment. The data processing circuitry is further configured to execute, in response to detecting the indication that the user equipment transmits with a transmit power above the threshold, an action to reduce a maximum power reduction of the user equipment to increase the achievable uplink throughput of the user equipment.

An advantage of certain embodiments described herein is that benefits of using multi-carrier operation in a cellular communication system may be balanced against a possible associated drawback of reduced uplink throughput where power limitations may apply such as at cell edges or in case of poor radio conditions.

Further advantages and features of embodiments will become apparent when reading the following detailed description in conjunction with the drawings.

### BRIEF DESCRIPTION OF THE DRAWINGS

Fig. 1 is a schematic block diagram of a cellular communications system in which embodiments of this disclosure may be implemented.
Fig. 2 is a schematic illustration of different non-overlapping in time HARQ processes being assigned on different carriers.
Fig. 3 is a flow diagram illustrating an embodiment of a method for controlling uplink throughput.
Fig. 4 is a flow diagram illustrating an alternative embodiment of a method for controlling uplink throughput.
Fig. 5 is a diagram illustrating an example of achievable uplink user throughput as a function of path loss for single and dual carrier transmission.
Fig. 6 is a flow diagram illustrating another alternative embodiment of a method for controlling uplink throughput.
Fig. 7 is a schematic block diagram of a radio base station according to an embodiment of this disclosure.
Fig. 8 is a diagram illustrating an example of mean achievable user bitrate for a single carrier of a DC-HSUPA system in case of different ratios in allocated power on the respective uplink carriers of the DC-HSUPA system.
Fig. 9 is a diagram illustrating a simplified representation of Cubic Metric (CM) and resulting maximum power reduction (MPR) as a function of power difference between two carriers of a DC-HSUPA system.
Fig. 10 is a diagram illustrating bitrate as a function of power difference between two carriers of a dual carrier uplink connection for different UE Power Headroom (UPH).
Fig. 11 is a schematic illustration of examples of scheduled and employed grants of a UE when the UE is subject to power control commands.

### DETAILED DESCRIPTION

The present invention will now be described more fully hereinafter with reference to the accompanying drawings, in which different exemplary embodiments are shown. These exemplary embodiments are provided so that this disclosure will be thorough and complete and not for purposes of limitation.

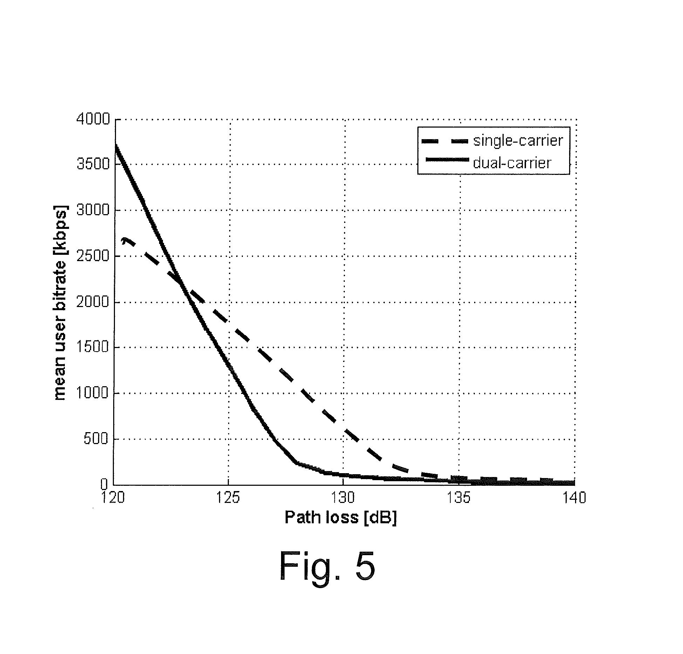

In Fig. 5 an example of achievable uplink user throughput in the form of mean user bitrate is depicted as a function of path loss for a single carrier transmission and dual carrier transmission, respectively. In the case of dual carrier transmission the scheduled data rates for the two carriers are equal in this example. It is seen that there is a crossover for which the throughput would be lower in the dual carrier case compared to the single carrier case. Accordingly, for users that have unfavorable radio conditions, uplink transmission on two or more carriers may result in degraded performance compared to single-carrier transmission. The main reasons for the degraded performance are the above mentioned drawbacks and difficulties associated with multi-carrier operation, namely that more power is spent on control channel overhead for multiple carriers, possible inefficiencies in power sharing for multiple carriers and that multi-carrier operation requires a larger maximum power reduction than single-carrier operation. The inventors have realized that the main reason that the throughput would be lower in the dual carrier case compared to the single carrier case when the pathloss is high, is the additional maximum power reduction needed for the composite dual carrier waveform.

According to embodiments of this disclosure, the potential performance degradation of uplink multi-carrier transmission compared to single-carrier transmission is mitigated by the radio access network detecting situations where a UE, which is configured in multi-carrier uplink transmission mode is power limited, or nearly power limited, and activating appropriate countermeasures to lower the required maximum power reduction, as will be explained in further detail below.

Several exemplary embodiments described below focus on the case of DC-HSUPA using contiguous carrier frequencies. However, all concepts are readily extendable to Multi-Carrier HSUPA (MC-HSUPA) operation over more than two uplink carriers, and system configurations wherein the carrier frequencies employed for the respective link direction are non-contiguous. Such non-contiguous carrier frequencies may be located in the same frequency band or in different frequency bands. The details of how to apply some of the embodiments described below will depend on the rules for how to compute the maximum power reduction for a particular application scenario, irrespective of whether those rules are set by a standard or specified by an operator. In 3GPP, the only multi-carrier scenario for which the maximum power reduction is defined so far is the adjacent dual-carrier case. However it is expected that 3GPP will define the rules for new extensions. One such extension, where the rules are not yet defined, relates to the case of carrier aggregation in Long Term Evolution (LTE), where the transmitted signal may occupy several, not necessarily contiguous frequency regions. It is to be noted that even though reference is made to 3GPP standards in several examples, the embodiments described herein may also be applied in connection with other standards. The principles of the embodiments described herein will be the same, but some parameters used for implementation may vary in different application scenarios based on e.g. system requirements with respect to maximum power reduction.

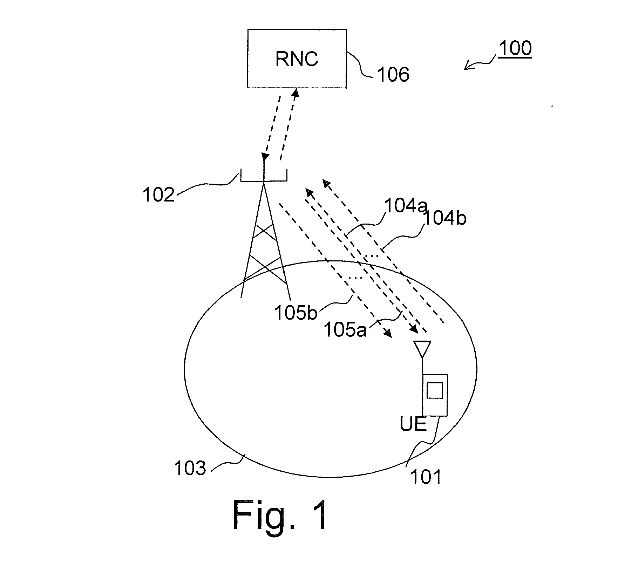

Fig. 1 illustrates an example of a cellular communications system, in which embodiments of this disclosure may be implemented. The exemplary cellular communications system is a High-Speed Packet Access (HSPA) system. For the sake of simplicity, only those parts of the communication system that are of particular relevance to the embodiments discussed herein are shown. The cellular communications system comprises a cellular network 100, which includes a radio base station 102, serving a user equipment (UE) 101 in a serving cell 103. A radio base station is a common implementation of a NodeB in WCDMA/HSPA so the radio base station 102 will also be referred to as NodeB 102 herein. The UE 101 is able to communicate with the radio base station 102 via one or multiple uplink carriers 104a, 104b and one or multiple downlink carriers 105a, 105b. Fig. 1 illustrates a scenario where multiple carriers are activated in both the uplink and the downlink. One of the uplink carriers 104a and 104b is configured as the primary uplink carrier, whereas the other one is configured as a secondary uplink carrier. In certain embodiments additional uplink carriers other than the two illustrated uplink carriers 104a and 104b may be used; these additional uplink carriers will then also be configured as secondary uplink carriers. One of the downlink carriers 105a and 105b is configured as the primary downlink carrier, whereas the other one is configured as a secondary downlink carrier. In certain embodiments additional downlink carriers other than the two illustrated downlink carriers 105a and 105b may be used; these additional downlink carriers will then also be configured as secondary downlink carriers. A Radio Network Controller (RNC) 106 controls the radio base station 102, and is, among other things, in charge of management of radio resources in cells for which the RNC 106 is responsible. Carrier configuration may according to the 3GPP standard be achieved by means of Radio Resource Control (RRC) signaling, a control plane signaling connecting the UE 101 and the RNC 106. In particular, according to the 3GPP standard releases 8, 9 and 10 configuration of multiple carriers is done via RRC signaling.

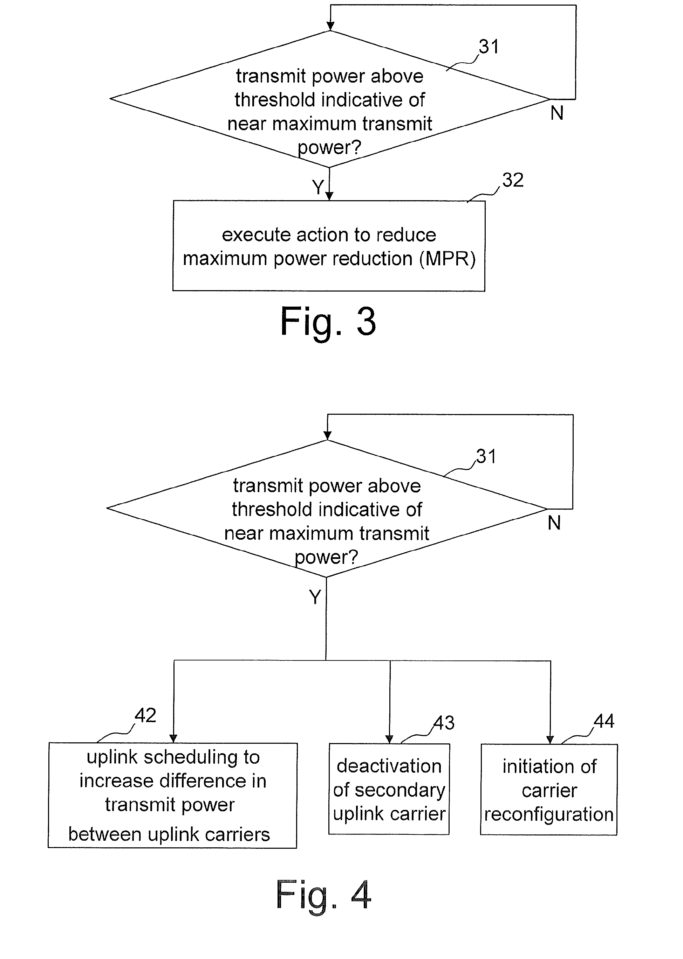

Fig. 3 is a flow diagram illustrating an embodiment of a method in the radio base station 102 for controlling uplink throughput. In a step 31, the radio base station 102 checks for an indication that the UE 101 transmits with a transmit power above a threshold indicating when the transmit power is near a maximum transmit power of the UE 101. The indication may be a direct indication of the actual transmit power used by the UE 101 or an indirect indication, e.g. a path loss measurement, that gives the radio base station an indication that the UE is likely to be using a transmit power above the threshold. The threshold may be preselected to provide an indication of when the UE transmits near maximum power. Assuming a maximum power output of 23dBm for the UE 101, the threshold for when the UE 101 is considered to transmit near maximum power may e.g. be set to 3-5 dB below maximum power, or 30-50% of maximum power. The value set for the threshold is a tuning parameter that for example can be selected based on measured system performance, and may depend on preferences and the application scenario. In some cases the threshold may be set to equal, or just slightly below, the maximum transmit power of the UE 101. The step 31 is performed to detect if the UE is power limited or close to power limited. If an indication that the UE 101 transmits with a transmit power above the threshold is detected in the step 31, an action to reduce a maximum power reduction (MPR) of the UE 101 is performed in a step 32. By reducing the maximum power reduction of the UE 101 when the UE 101 is power limited, the achievable uplink throughput of the UE 101 is increased. There are different types of actions that may be executed in the step 32 to reduce the maximum power reduction of the UE 101 as will be further explained in connection with different alternative embodiments.

Fig. 4 is a flow diagram illustrating an alternative embodiment of a method in the radio base station 102 for controlling uplink throughput. The first step of the method illustrated in Fig. 4 is the same as the step 31 of Fig. 3 explained above, i.e. checking for an indication that the UE 101 transmits with a transmit power above a threshold indicating when the transmit power is near a maximum transmit power of the UE 101. If the radio base station detects an indication that the UE 101 transmits with a transmit power above the threshold in the step 31, then an action to reduce the maximum power reduction of the UE 101 is executed in a step 42, 43 or 44. The action that is executed to reduce the maximum power reduction is one of: uplink scheduling to increase a difference in transmit power between the uplink carriers in the step 42, deactivation of a secondary uplink carrier in the step 43, and initiation of carrier reconfiguration to reduce the maximum power reduction of the UE 101 in the step 44. According to certain embodiments a static configuration determines which of the steps 42, 43 or 44 that is to be performed. According to other embodiments a dynamic selection is made between the steps 42, 43 or 44 based on parameters such as uplink activity, current transmit power distribution over the uplink carriers and/or system load. It is also possible that different of the steps 42, 43 and 44 are executed if the method is repeated consecutively. As an example, the step 42 may be executed a first time the method is performed. The step 31 is thereafter repeated (not shown in Fig. 3 or Fig. 4). If there is still an indication, according to the step 31, that the UE is power limited despite the execution of the step 42, the step 43 or the step 44 may be executed the second time that the method is performed.

The primary objective to consider, according to some embodiments of this disclosure, is to achieve as good uplink performance as possible for the users. The user performance can be quantified as the delay to upload a file, or correspondingly as the user throughput defined as the number of bits of the file, divided by the delay. In order to maximize the user throughput of a user, the communications system should aim at maximizing the successfully transmitted bitrate in each transmission time interval (TTI). With the introduction of DC-HSUPA additional degrees of freedom to do this optimization have appeared, compared to legacy single-carrier HSUPA (SC-HSUPA). In particular how the UE power is distributed among the available carriers is a factor that can be controlled by the cellular communications system, in particular by the radio base station. Furthermore, power differences can be shown to affect the achievable bitrate for power limited UEs as will be further discussed and explained below.

Now different alternatives will be discussed for detecting in the step 31 an indication that the UE 101 transmits with a transmit power above a threshold indicating when the transmit power is near a maximum transmit power of the UE 101, or in other words detecting that the UE 101 is power limited or close to power limited.

According to a first type of alternative embodiments it is detected if the UE 101 transmits on maximum power, or near maximum power, by means of evaluating uplink feedback information indicative of whether the user equipment (101) transmits with a transmit power above the threshold. The feedback information is received by the radio base station 102 either from the UE 101 or from the RNC 106.

According to a first exemplary embodiment for step 31, it is checked if a sum of the employed grant on the respective carrier is near the UE power headroom (UPH). The UPH is available in the NodeB through Medium Access Control (MAC) layer control signaling, in a so called Scheduling Information block. The accuracy of the reported UPH varies over the reported range and may be taken into account in the decision.

According to a second exemplary embodiment for step 31, it is checked if a sum of the employed grant on the respective carrier is near the UE power headroom (UPH) while the user is 'happy'. The so called 'happy bit' is a physical layer feedback information indicating if the UE given its current buffer load and power headroom is happy with the current grant allocation, or whether the UE would benefit from a higher grant. If the UE indicates through the 'happy bit' that it is unhappy, this is an indication that the UE is not power limited.

According to a third exemplary embodiment for step 31, it is checked if the data rate used by the UE is systematically lower than the scheduled data rate although an uplink RLC buffer is not emptied. The RLC buffer load is available via the Scheduling Information. Thus it can e.g. be considered an indication that the UE is power limited if the employed grant is lower than scheduled grant for k out of the n latest scheduled grants in which k and n are parameters that are set to suitable values.

According to a fourth exemplary embodiment for step 31, it is checked if "Event 6d" occurs. The standardized Event 6d serves as an indication to the network that a UE 101 is transmitting on its maximum power, and is available in the RNC 106 via RRC signaling. The RNC 106 would then need to inform the radio base station 102 that the Event 6d applies in order for the radio base station 102 to detect this.

According to a fifth exemplary embodiment for step 31, path loss measurements are checked. Path loss measurements are available in the RNC 106 via RRC signaling. In case of high path loss, above a selected limit, and with knowledge of the UEs maximum transmit power it can be assumed that the UE is likely to be power limited. The RNC may according to this exemplary embodiment inform the radio base station of the path loss measurements or that the RNC considers the UE 101 to be power limited.

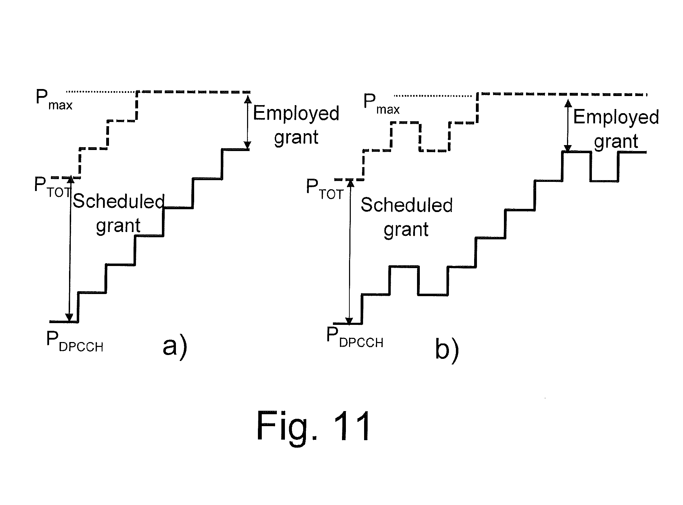

According to a sixth exemplary embodiment for step 31, any of the above measures according to the first, second, third, fourth and fifth exemplary embodiments is used together with accumulated uplink power control commands to obtain continuous estimates between the measurement reports and/or events. The radio base station may e.g. compare uplink power control commands signaled to the user equipment 101 to a detected transmit power used by the UE 101. As a more detailed example of how the power control commands can be used together with signaled feedback information from the UE, one way of combining the condition according to the third exemplary embodiment above with monitoring of accumulated uplink power control commands will be explained in connection with Fig. 11. Fig. 11 depicts exemplary levels of the DPCCH power P_{DPCCH} and total transmit power P_{TOT} of a UE subject to power control commands for a case a) and a case b). For simplicity we include only DPCCH and the data channel E-DPDCH in this description, and we also consider only single carrier here. When the UE is not power limited, and the RLC buffer is full, the total power P_{TOT} will follow the DPCCH power P_{DPCCH} with a power offset determined by the scheduled grant. The used power offset is not signaled directly, but indirectly via E-DCH Transport Format Combination Identifier (E-TFCI), which then can be mapped to a corresponding power level, known both to the UE 101 and the NodeB 102. However, as the UE 101 receives subsequent "up" power control commands, it eventually reaches its maximum transmit power Pₘₐₓ, becomes power limited, and cannot any longer employ the full grant, but instead a lower one. This is reflected in the UE 101 by selecting, and signaling, a lower E-TFCI. Deviations from the "nominal" E-TFCI corresponding to the scheduled grant can then be detected by the NodeB 102. Even though this description is done for single carrier transmission, it applies to both carriers in a dual-carrier scenario, and as soon as the behavior is detected on one of the carriers, the NodeB 102 can consider this as an indication that the UE has entered a power limited state.

The different feedback information alternatives according to the different exemplary embodiments of the first type of alternative embodiments may be combined to provide an indication of whether the UE transmits with a transmit power above the threshold, so that the decision whether to consider the UE 101 as power limited does not rely on only one type of information or information source.

According to a second type of alternative embodiments for detection of UE power limitation in the step 31, the downlink link quality is monitored to see whether a user is close to a cell edge. This can e.g. be done on the physical layer by measuring a required power on a power-controlled channel in the downlink e.g. the associated Fractional Dedicated Physical Channel (F-DPCH), or detecting a low reported Channel Quality Indicator (CQI), possibly combined with intra-frequency measurements of received signal strength from serving and neighboring cells. If the user is close to the cell edge the UE 101 is likely to be power limited.

According to a third type of alternative embodiments for detection of UE power limitation in the step 31, the radio base station 102 detects if the UE 101 is power limited and transmitting at similar power levels on the uplink carriers 104a and 104b based on a detailed report of the transmitter state, e.g. reported Cubic Metric or other indicator of the employed maximum power reduction. This method would require new signaling information not presently specified in the 3GPP specifications, either via the RRC layer, via the MAC layer e.g. as part of the present Scheduling Information block, or via the physical layer e.g., through the present happy bit on the secondary carrier. One alternative embodiment is that the UE 101 itself detects and reports situations where the current UE carrier utilization is deemed to limit the uplink throughput and possibly also requests or suggests a specific scheduling or reconfiguration action.

According to a fourth type of alternative embodiments for detection of UE power limitation in the step 31, the radio base station 102 monitors power relations between the received power of two or more physical control channels which have a prescribed power relation, such as E-DPDCH and DPCCH. This way the radio base station can detect if the UE is performing a power dependent reconfiguration, such as layer 1 power scaling, which indicates that the UE is power limited. Layer 1 power scaling is done when, given a certain selected E-TFCI, the available power still is not enough to transmit with the wanted power offset corresponding to the selected E-TFCI. There are two basic cases that are not captured by E-TFCI selection, making power scaling necessary. The first one refers to the fact that the E-TFCI selection is made once per TTI, which is 2 or 10ms, whereas the power control operates on slot basis, where a slot is 0.667 ms. Thus, if the power control command "up" is given, and the UE is already on the verge of being power limited, the DPCCH power is still increased if possible, and the E-DPDCH transmit power needs to be reduced below the desired value. The second case, which is similar, refers to retransmissions, where the same E-TFCI as in a first transmission is used, even if the power of E-DPDCH needs to be scaled down due to that the available power has decreased as a result of increased DPCCH power. The use of power scaling is itself not signaled, but can be detected by the NodeB 102. This can be done by measuring the received code power on E-DPDCH compared to DPCCH to see if it matches the value expected from the used E-TFCI. If it does not, it can be concluded that layer 1 power scaling is used, and thus that the UE 101 is power limited. An alternative to measuring the code power would be to measure and compare the signal-to-noise ratio on E-DPDCH and DPCCH, respectively. Accordingly, if the radio base station 102 detects that the UE 101 is employing a transmit power ratio between at least two physical uplink channels that differs from a transmit power ratio expected by the radio base station 102, the radio base station 102 can assume that the UE 101 is performing a power dependent reconfiguration, such as layer 1 power scaling, and is power limited. The transmit power ratio expected by the radio base station is e.g. the ratio corresponding to the selected E-TFCI.

The above described first, second, third and fourth types of embodiments can be combined into further alternative embodiments wherein conditions of different types of embodiments are combined and checked by the radio base station 102 to give an indication of whether the UE 101 transmits with transmit power above the threshold indicating when the transmit power is near, or at, a maximum transmit power of the user equipment.

According to the embodiments illustrated in Fig. 3 and Fig. 4, when it is detected by the radio base station 102 in the step 31 that the UE 101 transmits with transmit power above the threshold, an action is executed in the step 32, 42, 43 or 44 to reduce the maximum power reduction of the UE 101 to increase the achievable uplink throughput of the UE 101. Different alternative actions for reducing the maximum power reduction of the UE 101 will now be described in further detail.

A first alternative action for reducing the maximum power reduction of the UE 101 is uplink scheduling to increase a difference (or "skewness") in transmit power between uplink carriers (step 42). This scheduling action is, according to some embodiments, used as a first action that is executed before possibly executing any other action to reduce the maximum power reduction of the UE 101 if the UE 101 is still power limited. The scheduling action involves rescheduling the user to primarily use one uplink carrier 104a or 104b. This is here referred to as skew scheduling, meaning that scheduling imposes a systematic difference between scheduled data rates on different uplink carriers for a user. Even if there initially is a certain degree of skewness, i.e. difference in transmit power between the uplink carriers, the maximum power reduction of the UE 101 may be decreased further if the difference in transmit power increases further. As a result, more power in total can be allocated to the data channel E-DPDCH for both carriers, and the aggregated throughput, i.e. the achievable uplink throughput, may increase. However, there are also situations where the increase in scheduled data rate on one carrier is less than the reduction in scheduled data rate on the other one, leading to an overall reduction of the achieved data rate. Thus, for different scenarios there is a different optimal degree of skewness that maximizes the achievable uplink throughput.

The difference between scheduled data rates on the uplink carriers 104a, 104b can be achieved in several different ways such as by increasing the scheduled data rate on one uplink carrier relative to the scheduled data rate of another uplink carrier, by allocating scheduled data rates in different HARQ processes on different uplink carriers to achieve alternating power allocation on the uplink carriers or by explicitly limiting the maximum transmit power per uplink carrier, or the ratio of power allocated to each uplink carrier. Explicit signaling from the radio base station 102 to the UE 101 may be used in order to limit the maximum transmit power per uplink carrier, or the ratio of power allocated to each uplink carrier. The signaling to limit the maximum transmit power per uplink carrier may for example be done by signaling the transmit power in absolute numbers, or as a relation to the nominal maximum transmit power. Alternatively, the signaling may be an indication of a minimum power difference that needs to be maintained when the UE is close to being power limited.

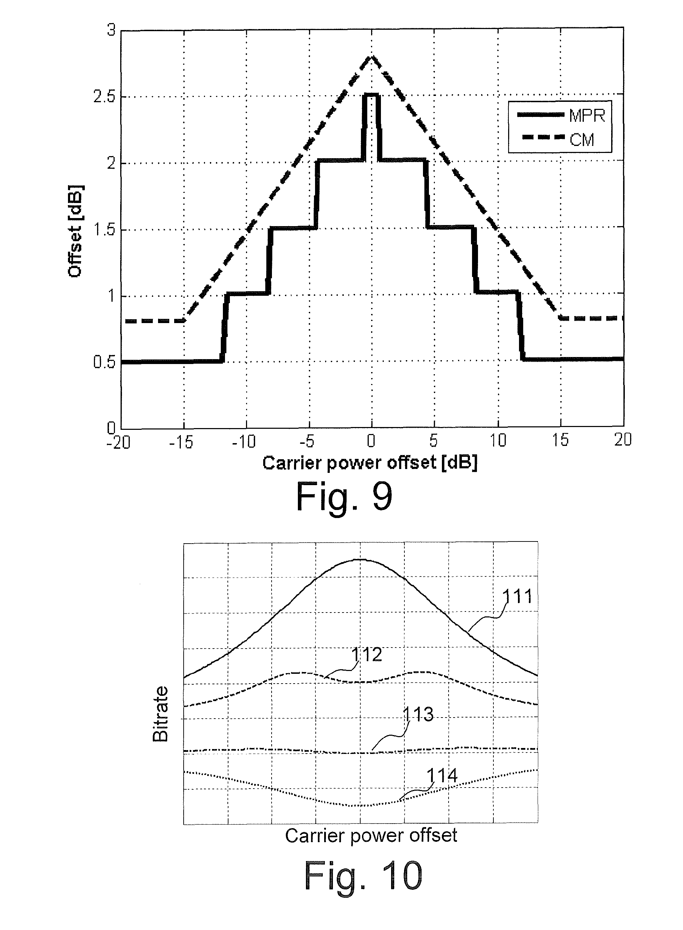

There are several different ways of determining the difference between scheduled data rates to be applied. The difference to be applied may e.g. be the optimal difference that maximizes the achievable uplink throughput or it may be a difference in scheduled data rates that results in satisfactory achievable uplink throughput according to some selected criteria. Some examples of determining the difference between the scheduled rates are:
a) Iteratively, by stepwise shifting the scheduled data rate from one carrier to the other until e. g. the MPR is reduced such that the uplink throughput is deemed to be maximized or satisfactory. If more than two uplink carriers are used it may be necessary to shift the scheduled data rate between several pairs of uplink carriers in order to approach the maximum aggregate data rate.
b) The desired power difference to be applied is determined in the NodeB 102 based on information about how the Cubic Metric depends on the power difference. This information can be represented either as detailed tabled information or as simplified functional relations. An example is shown in Fig. 9, which is a diagram illustrating a simplified representation of Cubic Metric (CM) and resulting maximum power reduction (MPR) as a function of power difference, i.e. carrier power offset, between two carriers of a DC-HSUPA system. In the case illustrated in Fig. 9 identical, fixed E-TFCIs with a single-carrier CM of 0.7 dB have been used on both carriers. This is reasonably representative of several E-TFCls except for the highest ones. From Fig. 9 it can be seen that the highest CM and MPR are required when the transmit powers on the two carriers are equal.
c) The difference between scheduled data rates on the uplink carriers 104a, 104b can be determined as a function of a scheduling headroom available for the user of interest on each carrier, by having the UE signal a "preferred skewness" or some other indication useful for the NodeB for determining a skewness to be applied. The preferred skewness, or skewness to be applied, can be based on tables of optimal power differences for various E-DCH Transport Format Combinations (E-TFCs) and UPH values on the two carriers. Fig. 10 is a diagram illustrating bitrate as a function of power difference, i.e. carrier power offset, between two carriers of a dual carrier uplink connection for different UE Power Headroom (UPH). Here the UPH is assumed to be equal on both carriers. Each curve 111, 112, 113 and 114 corresponds to different UPH. The carrier power offset that maximizes the bitrate depends on the UPH. The information illustrated in Fig. 10 may thus be used to determine a desired or optimal power difference between the uplink carriers. If the NodeB 102 has access to an appropriate model of the UE 101, e.g. in the form of tabled data, the NodeB 102 may be able to determine the desired or optimal power difference between the uplink carriers. Otherwise the UE may signal information which either explicitly or implicitly indicates the preferred skewness.
d) The NodeB 102 may select which one of the carriers that should have the lower scheduled data rate and which one that should have the highest scheduled data rate based on estimated noise rise levels for each carrier, for example so that the lower scheduled data rate is chosen for the carrier with the higher noise rise.
e) The NodeB 102 may exploit per Hybrid Automatic Repeat Request (HARQ) process scheduling to ensure that different HARQ processes are allocated to the UE 101 of interest on different uplink carriers. Then, in each time slot, the UE 101 would effectively have a non-zero scheduled data rate on one carrier and a zero scheduled data rate on the other carrier. An advantage of such a scheme is also that effective load sharing with respect to the UEs connected on a single uplink carrier only can be achieved, for example for UEs not supporting multi-carrier operation. Fig. 2 is a schematic illustration of different non-overlapping in time HARQ processes being assigned on different carriers. Assuming a first carrier f1 and a second carrier f2, the first carrier f1 is associated with a first HARQ process H1 and the second carrier is associated with a second HARQ process H2. Since the HARQ H1 and H2 are non-overlapping in time as illustrated in Fig. 2, complete skewness is achieved between the transmit powers of carriers f1 and f2. This difference in transmit power between the uplink carriers may be achieved by means of control signaling between the radio access network and the UE 101 explicitly limiting the maximum transmit power per carrier, or the ratio of power allocated to each carrier. Such control signaling may be realized in the form of a High-Speed Shared Control Channel (HS-SCCH) order sent to the UE 101 from the NodeB 102, or via RRC signaling sent to the UE from the RNC 106 via the NodeB 102, that signals the currently allowed minimum ratio of power allocated to the different uplink carriers 104a, 104b.

According to certain embodiments several of the above examples of how to achieve and determine the skew scheduling action are combined.

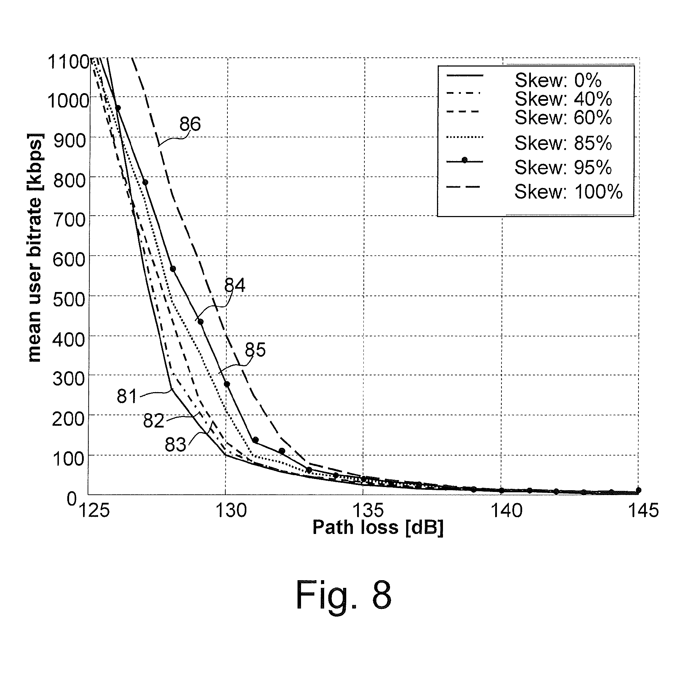

Fig. 8 is a diagram illustrating an example of mean achievable user bitrate for a single carrier of a DC-HSUPA system in case of different ratios in allocated power on the respective uplink carriers of the DC-HSUPA system. The curve 81 represents the mean achievable user bit rate in case of equal transmit power on the two uplink carriers. The curves 82, 83, 84 and 85 respectively represents 40%, 60%, 85% and 95% skewness in transmit power between the uplink carriers as illustrated in Fig. 8. The curve 86 represents 100% skewness in transmit power between the uplink carriers. Fig. 8 is an exemplary illustration of the potential performance improvement for a power limited user allocated on two carriers. It can be seen from Fig. 8 that the highest user bitrate is achieved by allocating a grant, i.e. a scheduled data rate, on one carrier only. This could either be achieved by a scheduling action only, e.g. according to any of the examples described above, or by deactivating the secondary carrier, which will be further elaborated on below. However, in certain situations, depending on scheduling headroom available on the respective carrier and quickly varying path loss and interference conditions, it might be favorable to allocate a non-zero grant on both carriers, and thereby increase overall utilization and performance. Hence a softer differentiation of grant could be useful, where the grant is higher on one carrier than on the other carrier. Observe that the power allocation per carrier in the UE according to 3GPP specifications is proportional to the power required for the DPCCH for that specific carrier scaled with the grant employed. Thus the actual power difference will follow fast fading and the actual skewness in transmit power will statistically be significant already with a low difference in grant. Accordingly, it can be understood from Fig. 8 that the user throughput can be controlled by controlling the difference in transmit power between the uplink carriers, e.g. according to any of the exemplary ways of achieving skew scheduling described above.

A second alternative action for reducing the maximum power reduction of the UE 101 is deactivation of a secondary uplink carrier (step 43). Deactivation of a secondary uplink carrier may be a suitable action if the power limitation of the UE is significant. One or several secondary uplink carriers that are not essential for the connection may be deactivated. The secondary uplink carrier may be deactivated by means of an HS-SCCH order, which is available in the 3GPP release 9 specifications. An advantage of deactivating the secondary uplink carrier is that a steeper filter may be employed in the UE 101, and that the aforementioned intermodulation products are avoided. Moreover, deactivation of the secondary uplink carrier also will result in that DPCCH transmissions on this carrier can be avoided.

A third alternative action for reducing the maximum power reduction of the UE 101 is initiation of a carrier reconfiguration (step 44). Whereas the secondary carrier activation/deactivation is controlled by the NodeB 102, the carrier configuration may also be changed more permanently by the RNC 106. This can according to 3GPP release 9 be achieved by means of RRC signaling, a control plane signaling connecting the terminal/UE and the RNC. The UE 101 may be reconfigured to single carrier mode or to perform handover of essential channels to a more favorable carrier or frequency band, where the UE may not anymore be power limited due to e.g. less path loss or lower load, or the maximum power reduction needed being lower. This may e.g. be realized by reconfiguration into simultaneous transmission in more than one frequency band, for a UE that supports this feature. As the need to reconfigure is envisaged to be detected in the NodeB 102, a signaling between the NodeB 102 and the RNC 106 is required to inform the RNC 106 that the reconfiguration is needed or desired. The reconfiguration could then be executed provided it is feasible and beneficial from an overall resource availability and utilization point of view. In case of high system load it may e.g. not be possible to achieve a more favorable configuration due to lack of available resources. Furthermore, if a reconfiguration can be expected to increase user throughput for the UE 101 but at the same time increase interference e.g. with the uplinks of other UEs, it might be better to refrain from reconfiguration.
Carrier reconfiguration is an action that is fairly slow, i.e. it takes longer to execute than the other mentioned alternative actions for reducing the maximum power reduction of the UE 101 discussed herein.

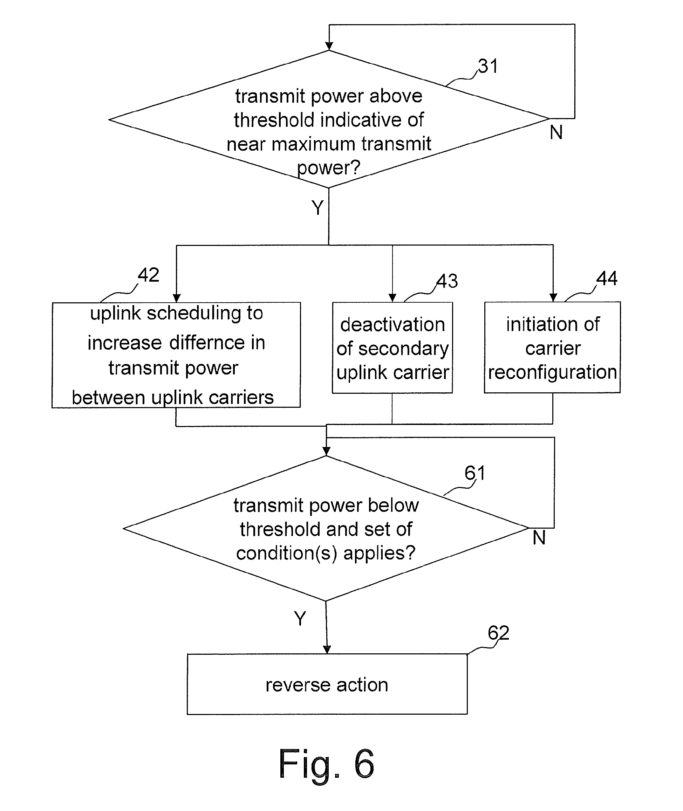

It can be noted that if the situation changes, e.g. after having performed the method illustrated in Fig. 3 or Fig. 4, such that the required maximum power reduction is insignificant and the UE 101 is far from being power limited, the actions described above for reducing the maximum power reduction of the UE 101 can be reversed. The radio base station may e.g. in response to detecting an indication that the user equipment no longer transmits with a transmit power above the threshold and that a set of conditions applies, reverse the action to reduce the maximum power reduction of the user equipment 101. The action that is reversed may be any of the above described actions to reduce the maximum power reduction. The set of conditions comprises one or several conditions selected to give an indication of when it is safe to reverse the action. Especially the set of conditions may include one or several conditions based on reported transmitter state of the UE, such as reported Cubic Metric or some indication of employed maximum power reduction. Fig. 6 is a flow chart illustrating such an embodiment. The method illustrated in Fig. 6 comprises the steps 31, 42, 43 and 44 described above in connection with Fig. 4. In a further step 61 it is detected if the transmit power is below the threshold and the set of conditions applies indicating that it is safe to reverse an action to reduce the maximum power reduction of the UE 101. If this is the case one or several of the actions according to the steps 42, 43 and 44 is reversed in a step 62. Thus a secondary uplink carrier may be activated and more uniform scheduling may be allowed on both uplink carriers in case of two active uplink carriers.

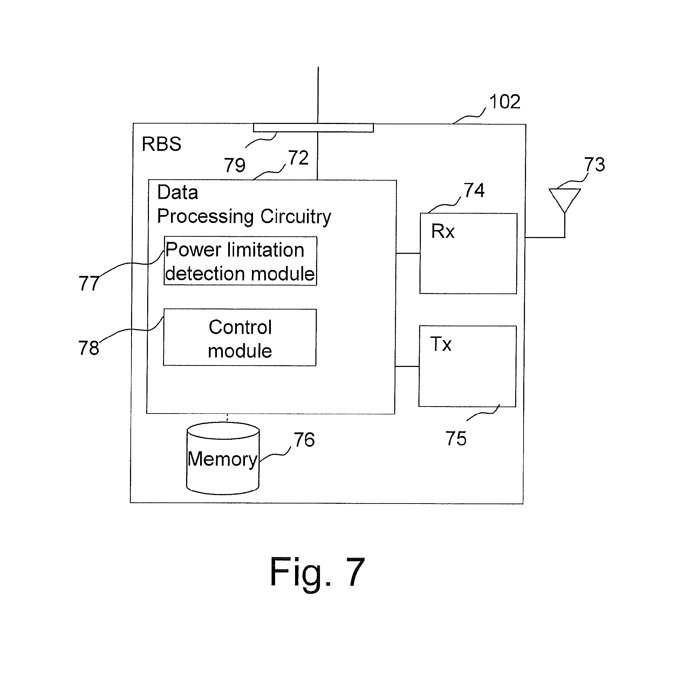

Fig. 7 is a schematic block diagram of an exemplary embodiment of the radio base station 102 adapted to perform any of the above described embodiments of a method for controlling uplink throughput such as the methods illustrated in Figs. 3, 4 or 6. As illustrated in Fig. 7, the radio base station 102 comprises digital data processing circuitry 72, one or several antennas 73, receiver circuitry 74 for reception of data messages, transmitter circuitry 75 for transmission of data messages, and an interface 79 for communication with higher level nodes such as the RNC 106 illustrated in Fig. 1. The receiver circuitry 74 and transmitter circuitry 75 may alternatively be integrated in a transceiver unit. The receiver circuitry 74 is particularly adapted to receive signaling messages which may comprise information providing an indication of whether the UE 101 transmits with a transmit power above the threshold according to the step 31. The transmitter circuitry 75 is particularly adapted to transmit signaling messages to a UE when the radio base station executes any of the actions according to the steps 32, 42 or 43. Any signaling message transmitted to the RNC 106 when executing the steps 32 or 44 would be transmitted over the interface 79. The digital data processing circuitry 72 is particularly configured to perform or control the method steps illustrated in one or several of Figs. 3, 4 or 6. For this purpose the digital data processing circuitry 72 may be configured with different modules. In fig. 7, two exemplary modules 77 and 78 are illustrated. The module 77 is a power limitation detection module for detecting an indication that the UE 101 transmits with a transmit power above the threshold according to the step 31. The module 78 is a control module for controlling execution of actions to reduce the maximum power reduction of the UE 101. The modules 77 and 78 are merely some examples and other modules may be used in alternative embodiments. The modules 77 and 78 would generally be program modules implemented in software, although implementations completely or partly in firmware, hardware or combinations thereof are also feasible. Program modules may be comprised in one or several computer program products embodied in the form of a volatile or non-volatile memory, e.g. a RAM, an EEPROM, a flash memory or a disc drive. The radio base station 102 in Fig. 7 also includes a memory 76. In case the modules 77 and 78 are program modules, these may be stored by the memory 76 and executed by the digital data processing circuitry. The digital data processing circuitry 72 may be embodied in the form of one or more programmable processors programmed to perform the steps according to one or several of Figs. 3, 4 or 6. However, any data processing circuitry or combination of different types of processing circuits that is capable of performing the mentioned steps could be used.

From the description above it is apparent that an advantage of some embodiments described above is that they improve uplink performance for power limited UEs in multi-carrier systems by adapting scheduling, carrier deactivation, or configuration.

Another advantage of some of the embodiments presented herein is that the wider bandwidth offered by MC-HSUPA may be utilized as far as possible, offering higher data rates and resource utilization, while maintaining performance at cell edges and other parts of a cell where power limitations may apply.

Yet another advantage is that even though several embodiments of this disclosure are described in the context of DC-HSUPA operation according to 3GPP release 9, many embodiments are applicable also to other multi-carrier transmission schemes, such as operation with more than two uplink carriers, operation with non-contiguous uplink carriers possibly in different frequency bands, operation in other radio access technologies such as LTE and operation in several radio access technologies simultaneously.

Yet another advantage of some of the embodiments presented herein is that they are simple to implement. According to some embodiments, merely a software update of an existing radio base station is required to implement the embodiments. Accordingly, some embodiments may not require any new hardware. In addition, already standardized measurements and signaling may be used in different embodiments as described above, which also facilitates implementation.

In the drawings and specification, there have been disclosed typical embodiments and, although specific terms are employed, they are used in a generic and descriptive sense only and not for purposes of limitation, the scope of the invention being set forth in the following claims.

## Claims

1. A method in a radio base station (102) of a cellular communications system (100) for controlling uplink throughput, wherein the radio base station (102) is in communication with a user equipment (101) using multiple uplink carriers (104a, 104b), the method comprising:
detecting (31) an indication that the user equipment (101) transmits with a transmit power above a threshold indicating when the transmit power is near a maximum transmit power of the user equipment (101); and
executing (32), in response to detecting the indication that the user equipment (101) transmits with a transmit power above the threshold, an action to reduce a maximum power reduction of the user equipment (101) to increase the achievable uplink throughput of the user equipment (101).

2. The method according to claim 1, wherein said action is one of:
uplink scheduling (42) to increase a difference in transmit power between the multiple uplink carriers (104a, 104b),
deactivation (43) of a secondary uplink carrier (104a, 104b), and
initiation (44) of carrier reconfiguration to reduce the maximum power reduction of the user equipment (101).

3. The method according to claim 2, wherein said action of uplink scheduling (42) to increase the difference in transmit power between the multiple uplink carriers involves increasing a scheduled data rate on one uplink carrier (104a) relative to a scheduled data rate of another uplink carrier (1 04b).

4. The method according to claim 2, wherein said action of uplink scheduling (42) to increase the difference in transmit power between the multiple uplink carriers (104a, 104b) involves allocating scheduled data rates in different non-overlapping in time Hybrid Automatic Repeat Request processes on different of the multiple uplink carriers (104a, 104b).

5. The method according to claim 2, wherein said action of uplink scheduling (42) to increase the difference in transmit power between the multiple uplink carriers (104a, 104b) involves
limiting the maximum transmit power per uplink carrier by explicit signaling to the user equipment (101) and/or
limiting the ratio of power allocated to each uplink carrier by explicit signaling to the user equipment (101).

6. The method according to any of claims 1-5, wherein detecting (31) an indication that the user equipment (101) transmits with a transmit power above the threshold involves evaluating uplink feedback information indicative of whether the user equipment (101) transmits with a transmit power above the threshold, which uplink feedback information is received from the user equipment (101) and/or from a radio network controller (106).

7. The method according to claim 6, wherein evaluating uplink feedback information includes
comparing a sum of employed grants on the respective uplink carriers (104a, 104b) to the user equipment power headroom, UPH,
checking the state of a happy bit received in feedback information from the user equipment (101),
checking if the data rate employed by the user equipment (101) is systematically lower than the scheduled data rate allocated to the user equipment (101) while the user equipment (101) indicates that a transmit buffer of the user equipment (101) is not emptied,
receiving signaling information indicating that the user equipment (101) is transmitting with maximum power,
evaluating path loss measurements, and/or
comparing uplink power control commands signalled to the user equipment (101) to a detected transmit power used by the user equipment (101).

8. The method according to any of claims 1-7, wherein detecting that the user equipment (101) transmits with a transmit power above the predetermined threshold involves detecting if the user equipment (101) performs a power dependent reconfiguration, wherein the power dependent reconfiguration involves the user equipment employing a transmit power ratio between at least two physical uplink channels that differs from a transmit power ratio expected by the radio base station.

9. The method according to any of claims 1-8, further comprising, in response to detecting an indication that the user equipment (101) no longer transmits with a transmit power above the threshold and that a set of conditions applies, reversing (62) an action to reduce the maximum power reduction of the user equipment (101), wherein said action which is reversed is one of:
uplink scheduling to increase a difference in transmit power between the multiple uplink carriers,
deactivation of a secondary uplink carrier (104a, 104b), and
initiation of carrier reconfiguration to reduce the maximum power reduction of the user equipment (101).

10. A radio base station (102) for use in a cellular communications system (100), wherein the radio base station (102) comprises a receiver (74) and a transmitter (75) for communication with a user equipment (101) using multiple uplink carriers (104a, 104b), wherein the radio base station (102) further comprises data processing circuitry (72) configured to
detect an indication that the user equipment (101) transmits with a transmit power above a threshold indicating when the transmit power is near a maximum transmit power of the user equipment (101) and to
execute, in response to detecting the indication that the user equipment (101) transmits with a transmit power above the threshold, an action to reduce a maximum power reduction of the user equipment (101) to increase the achievable uplink throughput of the user equipment (101).

11. The radio base station (102) according to claim 10, wherein said action, which the data processing circuitry (72) is configured to execute in response to detecting the indication that the user equipment (101) transmits with a transmit power above the threshold, is one of:
uplink scheduling to increase a difference in transmit power between the multiple uplink carriers (104a, 104b),
deactivation of a secondary uplink carrier (104a, 104b), and
initiation of carrier reconfiguration to reduce the maximum power reduction of the user equipment (101).

12. The radio base station (102) according to claim 11, wherein the data processing circuitry (72) is configured to execute said action of uplink scheduling to increase the difference in transmit power between the multiple uplink carriers (104a, 104b) by increasing a scheduled data rate on one uplink carrier (104a) relative to a scheduled data rate of another uplink carrier (104b).

13. The radio base station (102) according to claim 11, wherein the data processing circuitry (72) is configured to execute said action of uplink scheduling to increase the difference in transmit power between the multiple uplink carriers (104a, 104b) by allocating scheduled data rates in different non-overlapping in time Hybrid Automatic Repeat Request processes on different of the multiple uplink carriers (1 04a, 104b).

14. The radio base station (102) according to claim 11, wherein the data processing circuitry (72) is configured to execute said action of uplink scheduling to increase the difference in transmit power between the multiple uplink carriers (1 04a, 104b) by initiating the transmitter to transmit, to the user equipment (101), signaling information explicitly limiting the maximum transmit power per uplink carrier (104a, 104b) and/or explicitly limiting the ratio of power allocated to each uplink carrier (104a, 104b).

15. The radio base station (102) according to any of claims 10-14, wherein the data processing circuitry is configured to detect the indication that the user equipment (101) transmits with a transmit power above the threshold by evaluating uplink feedback information indicative of whether the user equipment (101) transmits with a transmit power above the threshold, which uplink feedback information is received from the user equipment (101) and/or from a radio network controller (106).

16. The radio base station (102) according to claim 15, wherein the data processing circuitry (72) is configured to evaluate uplink feedback information by
comparing a sum of employed grants on the respective uplink carriers (104a, 104b) to the user equipment power headroom, UPH;
checking the state of a happy bit received in feedback information from the user equipment (101);
checking if the data rate employed by the user equipment (101) is systematically lower than the scheduled data rate allocated to the user equipment (101) while the user equipment (101) indicates that a transmit buffer of the user equipment (101) is not emptied;
receiving signaling information indicating that the user equipment (101) is transmitting with maximum power;
evaluating path loss measurements; and/or
comparing uplink power control commands signalled to the user equipment (101) to a detected transmit power used by the user equipment (101).

17. The radio base station (102) according to any of claims 10-16, wherein the data processing circuitry (72) is configured to monitor downlink channel quality as an indication of the user equipment's closeness to a cell edge.

18. The radio base station (102) according to any of claims 10-17, wherein the data processing circuitry (72) is configured to detect that the user equipment (101) transmits with a transmit power above the threshold by receiving a signaling message indicative of the transmit power levels employed by the user equipment (101) on the respective uplink carriers (104a, 104b).

19. The radio base station (102) according to any of claims 10-18, wherein the data processing circuitry (72) is configured to detect that the user equipment (101) transmits with a transmit power above the predetermined threshold by detecting if the user equipment (101) performs a power dependent reconfiguration, wherein the power dependent reconfiguration involves the user equipment employing a transmit power ratio between at least two physical uplink channels that differs from a transmit power ratio expected by the radio base station.

20. The radio base station (102) according to any of claims 10-19, wherein the data processing circuitry (72) is further configured to, in response to detecting an indication that the user equipment (101) no longer transmits with a transmit power above the threshold and that a set of conditions applies, reverse (62) an action to reduce the maximum power reduction of the user equipment (101), wherein said action to be reversed is one of:
uplink scheduling to increase the difference in transmit power between the multiple uplink carriers (104a, 104b),
deactivation of a secondary uplink carrier (104a, 104b), and
initiation of carrier reconfiguration to reduce the maximum power reduction of the user equipment (101).

## Amended claims

### Amended claims in accordance with Rule 137(2) EPC.

**1.** A method in a radio base station (102) of a cellular communications system (100) for controlling uplink throughput, wherein the radio base station (102) is in communication with a user equipment (101) using multiple uplink carriers (104a, 104b), the method comprising:
detecting (31) an indication that the user equipment (101) transmits with a transmit power above a threshold indicating when the transmit power is near a maximum transmit power of the user equipment (101); **characterized by** the method further comprising
executing (32), in response to detecting the indication that the user equipment (101) transmits with a transmit power above the threshold, an action to reduce a maximum power reduction of the user equipment (101) to increase the achievable uplink throughput of the user equipment (101), wherein said action is one of:
uplink scheduling (42) to increase a difference in transmit power between the multiple uplink carriers (104a, 104b),
deactivation (43) of a secondary uplink carrier (104a, 104b), and
initiation (44) of carrier reconfiguration to reduce the maximum power reduction of the user equipment (101).

**2.** The method according to claim 1, wherein said action of uplink scheduling (42) to increase the difference in transmit power between the multiple uplink carriers involves increasing a scheduled data rate on one uplink carrier (104a) relative to a scheduled data rate of another uplink carrier (104b).

**3.** The method according to claim 1, wherein said action of uplink scheduling (42) to increase the difference in transmit power between the multiple uplink carriers (104a, 104b) involves allocating scheduled data rates in different non-overlapping in time Hybrid Automatic Repeat Request processes on different of the multiple uplink carriers (104a, 104b).

**4.** The method according to claim 1, wherein said action of uplink scheduling (42) to increase the difference in transmit power between the multiple uplink carriers (104a, 104b) involves
limiting the maximum transmit power per uplink carrier by explicit signaling to the user equipment (101) and/or
limiting the ratio of power allocated to each uplink carrier by explicit signaling to the user equipment (101).

**5.** The method according to any of claims 1-4, wherein detecting (31) an indication that the user equipment (101) transmits with a transmit power above the threshold involves evaluating uplink feedback information indicative of whether the user equipment (101) transmits with a transmit power above the threshold, which uplink feedback information is received from the user equipment (101) and/or from a radio network controller (106).

**6.** The method according to claim 5, wherein evaluating uplink feedback information includes
comparing a sum of employed grants on the respective uplink carriers (104a, 104b) to the user equipment power headroom, UPH,
checking the state of a happy bit received in feedback information from the user equipment (101),
checking if the data rate employed by the user equipment (101) is systematically lower than the scheduled data rate allocated to the user equipment (101) while the user equipment (101) indicates that a transmit buffer of the user equipment (101) is not emptied,
receiving signaling information indicating that the user equipment (101) is transmitting with maximum power,
evaluating path loss measurements, and/or
comparing uplink power control commands signalled to the user equipment (101) to a detected transmit power used by the user equipment (101).

**7.** The method according to any of claims 1-6, wherein detecting that the user equipment (101) transmits with a transmit power above the predetermined threshold involves detecting if the user equipment (101) performs a power dependent reconfiguration, wherein the power dependent reconfiguration involves the user equipment employing a transmit power ratio between at least two physical uplink channels that differs from a transmit power ratio expected by the radio base station.

**8.** The method according to any of claims 1-7, further comprising, in response to detecting an indication that the user equipment (101) no longer transmits with a transmit power above the threshold and that a set of conditions applies, reversing (62) an action to reduce the maximum power reduction of the user equipment (101), wherein said action which is reversed is one of:
uplink scheduling to increase a difference in transmit power between the multiple uplink carriers,
deactivation of a secondary uplink carrier (104a, 104b), and
initiation of carrier reconfiguration to reduce the maximum power reduction of the user equipment (101).

**9.** A radio base station (102) for use in a cellular communications system (100), wherein the radio base station (102) comprises a receiver (74) and a transmitter (75) for communication with a user equipment (101) using multiple uplink carriers (104a, 104b), wherein the radio base station (102) further comprises data processing circuitry (72) configured to
detect an indication that the user equipment (101) transmits with a transmit power above a threshold indicating when the transmit power is near a maximum transmit power of the user equipment (101),
**characterized in that** the data processing circuitry (72) is further configured to
execute, in response to detecting the indication that the user equipment (101) transmits with a transmit power above the threshold, an action to reduce a maximum power reduction of the user equipment (101) to increase the achievable uplink throughput of the user equipment (101), wherein said action, which the data processing circuitry (72) is configured to execute in response to detecting the indication that the user equipment (101) transmits with a transmit power above the threshold, is one of:
uplink scheduling to increase a difference in transmit power between the multiple uplink carriers (104a, 104b),
deactivation of a secondary uplink carrier (104a, 104b), and
initiation of carrier reconfiguration to reduce the maximum power reduction of the user equipment (101).

**10.** The radio base station (102) according to claim 9, wherein the data processing circuitry (72) is configured to execute said action of uplink scheduling to increase the difference in transmit power between the multiple uplink carriers (104a, 104b) by increasing a scheduled data rate on one uplink carrier (104a) relative to a scheduled data rate of another uplink carrier (104b).

**11.** The radio base station (102) according to claim 9, wherein the data processing circuitry (72) is configured to execute said action of uplink scheduling to increase the difference in transmit power between the multiple uplink carriers (104a, 104b) by allocating scheduled data rates in different non-overlapping in time Hybrid Automatic Repeat Request processes on different of the multiple uplink carriers (104a, 104b).

**12.** The radio base station (102) according to claim 9, wherein the data processing circuitry (72) is configured to execute said action of uplink scheduling to increase the difference in transmit power between the multiple uplink carriers (104a, 104b) by initiating the transmitter to transmit, to the user equipment (101), signaling information explicitly limiting the maximum transmit power per uplink carrier (104a, 104b) and/or explicitly limiting the ratio of power allocated to each uplink carrier (104a, 104b).

**13.** The radio base station (102) according to any of claims 9-12, wherein the data processing circuitry is configured to detect the indication that the user equipment (101) transmits with a transmit power above the threshold by evaluating uplink feedback information indicative of whether the user equipment (101) transmits with a transmit power above the threshold, which uplink feedback information is received from the user equipment (101) and/or from a radio network controller (106).

**14.** The radio base station (102) according to claim 13, wherein the data processing circuitry (72) is configured to evaluate uplink feedback information by
comparing a sum of employed grants on the respective uplink carriers (104a, 104b) to the user equipment power headroom, UPH;
checking the state of a happy bit received in feedback information from the user equipment (101);
checking if the data rate employed by the user equipment (101) is systematically lower than the scheduled data rate allocated to the user equipment (101) while the user equipment (101) indicates that a transmit buffer of the user equipment (101) is not emptied;
receiving signaling information indicating that the user equipment (101) is transmitting with maximum power;
evaluating path loss measurements; and/or
comparing uplink power control commands signalled to the user equipment (101) to a detected transmit power used by the user equipment (101).

**15.** The radio base station (102) according to any of claims 9-14, wherein the data processing circuitry (72) is configured to monitor downlink channel quality as an indication of the user equipment's closeness to a cell edge.

**16.** The radio base station (102) according to any of claims 9-15, wherein the data processing circuitry (72) is configured to detect that the user equipment (101) transmits with a transmit power above the threshold by receiving a signaling message indicative of the transmit power levels employed by the user equipment (101) on the respective uplink carriers (104a, 104b).

**17.** The radio base station (102) according to any of claims 9-16, wherein the data processing circuitry (72) is configured to detect that the user equipment (101) transmits with a transmit power above the predetermined threshold by detecting if the user equipment (101) performs a power dependent reconfiguration, wherein the power dependent reconfiguration involves the user equipment employing a transmit power ratio between at least two physical uplink channels that differs from a transmit power ratio expected by the radio base station.

**18.** The radio base station (102) according to any of claims 9-17, wherein the data processing circuitry (72) is further configured to, in response to detecting an indication that the user equipment (101) no longer transmits with a transmit power above the threshold and that a set of conditions applies, reverse (62) an action to reduce the maximum power reduction of the user equipment (101), wherein said action to be reversed is one of:
uplink scheduling to increase the difference in transmit power between the multiple uplink carriers (104a, 104b),
deactivation of a secondary uplink carrier (104a, 104b), and
initiation of carrier reconfiguration to reduce the maximum power reduction of the user equipment (101).
